**Europäisches Patentamt**

(19) **European Patent Office**

**Office européen des brevets**

(11) Numéro de publication: **0 113 628**
**B1**

(12) # FASCICULE DE BREVET EUROPEEN

(45) Date de publication du fascicule du brevet:
**22.04.87**

(51) Int. Cl.⁴: **H 02 K 5/136**

(21) Numéro de dépôt: **83402499.4**

(22) Date de dépôt: **21.12.83**

---

(54) Machine électrique tournante à enveloppe antidéflagrante.

---

(30) Priorité: **22.12.82 FR 8221546**

(43) Date de publication de la demande:
**18.07.84 Bulletin 84/29**

(45) Mention de la délivrance du brevet:
**22.04.87 Bulletin 87/17**

(84) Etats contractants désignés:
**AT BE DE GB IT SE**

(56) Documents cités:
**CH - A - 535 529**
**DE - A - 3 012 715**
**DE - C - 679 655**
**FR - A - 761 437**
**FR - A - 1 443 284**
**US - A - 2 512 136**
**US - A - 2 911 918**

(73) Titulaire: **BBC BROWN BOVERI FRANCE S.A., 21, Rue des Trois Fontanot Parc de la Defense, F-92000 Nanterre (FR)**

(72) Inventeur: **Chabanette, Franck, 22, Rue Montferrat, F-69500 Bron (FR)**

(74) Mandataire: **Laget, Jean-Loup et al, Cabinet Pierre Loyer 18, Rue de Mogador, F-75009 Paris (FR)**

## Description

L'invention concerne une machine électrique tournante à enveloppe antidéflagrante.

Les machines tournantes à enveloppe antidéflagrante sont utilisées dans les atmosphères explosives, pour éviter qu'une explosion se produisant à l'intérieur de l'enveloppe ne puisse se propager à l'extérieur. Dans les machines connues de ce type, on utilise des éléments constitutifs spécifiques pour éviter la communication directe entre l'intérieur et l'extérieur de l'enveloppe. Ainsi, les carcasses de stator sont spécialement conçues pour présenter des emboîtements longs pour les paliers et les systèmes de raccordement. De même, les paliers spéciaux permettent des emboîtements longs sur des sorties d'arbres allongées.

Ce mode de construction, qui porte sur des quantités de machines relativement limitées, nécessite des investissements lourds qui ne peuvent être amortis que sur des durées longues. Cette situation n'est pas très satisfaisante sur le plan économique.

Il est connu, par le document US-A 2 911 918, de réaliser un groupe motopompe destiné à être immergé dans un liquide inflammable. Le stator est alors encapsulé au moyen d'une enveloppe intérieure cylindrique, et l'arbre du rotor porte un pare-flamme à section axiale en baïonnette, présentant une surface externe cylindrique disposée au voisinage immédiat de l'enveloppe intérieure cylindrique du stator. Il s'agit là d'une construction tout à fait spéciale en raison-même de l'immersion du groupe moto-pompe.

Il est également connu par le document CH-A 535 529 de prévoir dans la carcasse d'un moteur, une enceinte auxiliaire, présentant vers le rotor une ouverture en mousse poreuse ou en métal déployé, et susceptible en cas d'explosion d'absorber le surcroit de pression dans la carcasse du moteur. Cette réalisation impose de surdimensionner la carcasse ou les flasques pour y loger l'enceinte auxiliaire, ce qui conduit là encore à concevoir une fabrication spéciale.

L'un des buts de la présente invention est de prévoir des machines tournantes à enveloppe antidéflagrante, dont la fabrication mette en œuvre des pièces mécaniques classiques et non spéciales, de façon à diminuer les prix de revient. Un autre but de l'invention est de prévoir des machines de ce type faciles à monter, avec des éléments spécifiques en nombre limité, et répondant aux normes en vigueur pour le fonctionnement en atmosphère explosive.

L'invention a pour objet une machine électrique tournante à enveloppe antidéflagrante, réalisée à partir d'une machine classique comportant une carcasse munie de paliers, un stator, un rotor et un arbre de rotor, du type dans laquelle sont prévus des écrans présentant une surface sensiblement perpendiculaire à l'axe du rotor, une surface cylindrique externe, et une surface cylindrique interne, située au voisinage de l'arbre, chacune de ces surfaces cylindriques étant parallèle à l'axe du rotor, caractérisée en ce que son enveloppe antidéflagrante est constituée par la carcasse et des écrans fixes ayant leurs surfaces cylindriques du même côté de leur surface plane, et dont la surface cylindrique externe est disposée au voisinage immédiat de la surface intérieure de la carcasse.

Selon une autre caractéristique de l'invention, les écrans sont fixés sur la carcasse de la machine de telle sorte que l'ensemble de la carcasse et des écrans constitue l'enveloppe antidéflagrante.

D'autres caractéristiques de l'invention ressortent de la description qui suit faite avec référence au dessin annexé sur lequel on peut voir:

Fig. 1 – une vue en coupe axiale d'une machine tournante à enveloppe antidéflagrante selon l'invention, à un seul écran fixe,

Fig. 2 – une vue en coupe axiale partielle d'une machine à un écran fixe et un écran tournant;

Fig. 3 – une vue analogue à la précedente d'une machine à deux écrans fixes.

En se reportant au dessin, on peut voir une machine tournante classique dans sa construction, avec une carcasse 1, un stator 2, un rotor 3, un arbre 4 tournant dans des paliers 5.

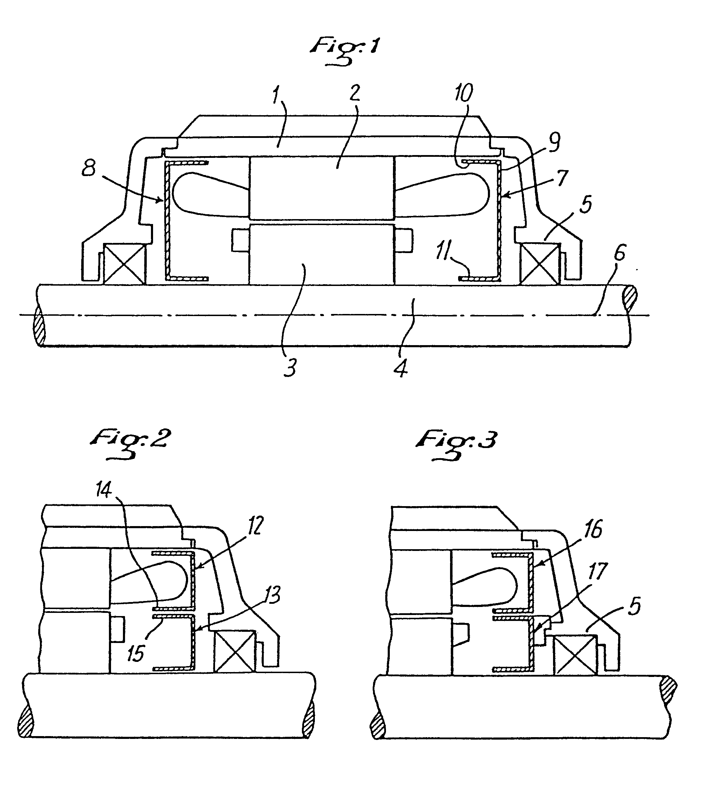

L'axe géométrique de rotation est symbolisé en 6. Selon l'invention, cette machine est munie de deux écrans fixes 7 et 8, un de chaque côté du rotor 3 (Figure 1). Chacun de ces écrans présente une face 9 perpendiculaire à l'axe 6, une surface cylindrique externe 10 au voisinage immédiat de la surface interne de la carcasse du stator, et une surface cylindrique interne 11 au voisinage immédiat de l'arbre 4. Dans cet exemple de réalisation, l'écran fixe définit un joint antidéflarant fixe au droit de la carcasse de stator et un joint antidéflagrant tournant au droit de l'arbre.

Ainsi, à l'intérieur de la carcasse classique de la machine tournante, les écrans englobent les parties actives de la machine pour constituer avec la carcasse une enveloppe antidéflagrante. Les écrans assurent la définition des joints antidéflagrants entre les parties fixes et les parties mobiles de la machine. Ces écrans peuvent être réalisés en tous matériaux autorisés par les normes en vigueur pour les machines à enveloppe antidéflagrante: tôle d'acier, fonte, alliage d'aluminium ou d'autres métaux, matières plastiques, ou même association de plusieurs de ces matériaux.

Sur les figures 2 et 3, on a représenté divers modes de réalisation d'écrans aptes à définir avec la carcasse, une enveloppe antidéflagrante.

Sur la figure 2, un écran fixe 12 est associé à un écran tournant 13. Chacun présente une surface cylindrique en regard, 14 et 15 respectivement, définissant entre elles un joint antidéflagrant tournant.

Sur la figure 3, deux écrans fixes 16 et 17 définissent entre eux un joint antidéflagrant fixe de forme cylindrique.

Ces différentes formes d'écrans peuvent être combinées dans la même machine sans inconvénient, en fonction de la structure propre de la machine. Suivant les impératifs de réalisation, les écrans peuvent être mis en place avec ou sans usinage complémentaire, par rapport à ce qui est fait sur une machine classique, et ils peuvent être fixés par tout moyen sur l'une quelconque des parties de la machine.

Le raccordement de la machine à enveloppe antidéflagrante au réseau électrique peut se faire par tout moyen compatible avec son utilisation en atmosphère explosive, et notamment grâce à une boîte à bornes antidéflagrante ou à sécurité augmentée.

Le raccordement est en général prévu sur la traversée des bornes de la machine classique, par mesure de simplification.

Selon l'invention, les pièces principales de la machine sont celles d'une machine classique, seuls les écrans étant rapportés à l'intérieur de la carcasse. De ce fait, les investissements sont considérablement réduits et peuvent s'amortir sur des quantités beaucoup plus importantes, ce qui présente un intérêt économique évident. Pour la même raison, le prix de revient d'une machine à enveloppe antidéflagrante est un peu plus élevé que celui d'une machine classique, mais nettement plus faible que celui d'une machine antidéflagrante de type connu.

Tout au long de la description, on a utilisé la terminologie «machine électrique tournante», car l'invention s'applique aussi bien aux génératrices qu'aux moteurs, fonctionnant aussi bien en courant continu qu'en courant alternatif.

**Revendications**

1. Machine électrique tournante à enveloppe antidéflagrante réalisée à partir d'une machine classique comportant une carcasse (1) munie de paliers (5), un stator (2), un rotor (3) et un arbre (4) de rotor, du type dans laquelle sont prévus des écrans (7, 8, 12, 13, 16, 17) presentant une surface (9) sensiblement perpendiculaire à l'axe (6) du rotor (3), une surface cylindrique externe (10), et une surface cylindrique interne (11) située au voisinage de l'arbre (4), chacune de ces surfaces cylindriques (10, 11) étant parallèle à l'axe (6) du rotor (3), caractérisée en ce que son enveloppe antidéflagrante est constituée par la carcasse (1) et des écrans (7, 8, 12, 16) fixes, ayant leurs surfaces cylindriques du même côté de leur surface plane, et dont la surface cylindrique externe (10) est disposée au voisinage immédiat de la surface intérieure de la carcasse (1).

2. Machine selon la revendication 1, caractérisée en ce que les écrans (7, 8, 12, 16) sont fixés à la carcasse (1), de telle sorte que l'ensemble de la carcasse et des écrans constitue l'enveloppe antidéflagrante.

**Patentanprüche**

1. Umlaufende Elektromaschine mit explosionsgeschütztem Gehäuse, abgeleitet aus einer üblichen Maschine mit einem mit Lagern (5) versehenen Ständergehäuse (1), einem Ständer (2), einem Läufer (3) und einer Läuferwelle (4) und mit Abschirmungen (7, 8, 12, 13, 16, 17), die eine im wesentlichen senkrecht zu der Achse (6) des Läufers (3) ausgerichtete Fläche (9) aufweisen, eine äussere Zylinderfläche (10) sowie eine innere Zylinderfläche (11), die nahe an die Welle (4) heranreicht, wobei die beiden Zylinderflächen (10, 11) parallel zu der Achse (6) des Läufers (3) ausgerichtet sind, dadurch gekennzeichnet, dass das explosionsgeschützte Gehäuse von dem Ständergehäuse (1) und von feststehenden Abschirmungen (7, 8, 12, 16) gebildet wird, deren Zylinderflächen auf der gleichen Seite der ebenen Abschirmungsfläche liegen und deren äussere Zylinderfläche (10) in unmittelbarer Nähe der Innenseite des Ständergehäuses (1) angeordnet ist.

2. Maschine nach Anspruch 1, dadurch gekennzeichnet, dass die Abschirmungen (7, 8, 12, 16) an dem Ständergehäuse (1) befestigt sind, so dass die aus dem Ständergehäuse und den Abschirmungen bestehende Bauteilgruppe das explosionsgeschützte Gehäuse bildet.

**Claims**

1. Electrical rotary machine with explosion-proof housing constructed from a conventional machine comprising a casing (1) provided with bearings (5), a stator (2), a rotor (3), and a rotor shaft (4), of the type wherein shields (7, 8, 12, 13, 16, 17) are provided which have a surface (9) substantially perpendicular to the axis (6) of the rotor (3), an outer cylindrical surface (10), and an inner cylindrical surface (11) situated in the vicinity of the shaft (4), each of these cylindrical surfaces (10, 11) being parallel to the axis (6) of the rotor (3), characterised in that its explosion-proof housing is constituted by the casing (1) and fixed shields (7, 8, 12, 16) which have their cylindrical surfaces at the same side of their plane surface, and the outer cylindrical surface (10) of which is situated in the immediate vicinity of the casing (1).

2. Machine according to claim 1, characterised in that the shields (7, 8, 12, 16) are fixed to the casing (1), in such a manner that the assembly constituted by the casing and the shields constitutes the explosionproof housing.

Fig.1

Fig.2

Fig.3